Europäisches Patentamt

European Patent Office

Office européen des brevets

(11) Publication number: **0 281 264 B1**

# EUROPEAN PATENT SPECIFICATION

(45) Date of publication of the patent specification: 24.10.90

(51) Int. Cl.⁵: **F02K 1/00, F02K 1/12, F02K 1/62**

(21) Application number: 88301150.4

(22) Date of filing: 11.02.88

(54) Vectorable variable flow area propulsion nozzle.

(30) Priority: 26.02.87 US 19121

(43) Date of publication of application:
07.09.88 Bulletin 88/36

(45) Publication of the grant of the patent:
24.10.90 Bulletin 90/43

(84) Designated Contracting States:
DE ES FR GB

(56) References cited:
DE-A- 1 964 716
FR-A- 1 071 851
GB-A- 1 224 879
GB-A- 2 032 862
GB-A- 2 132 278

(73) Proprietor: ROLLS-ROYCE plc, 65 Buckingham Gate, London, SW1E 6AT(GB)

(72) Inventor: Nightingale, Douglas John, 8975 Emerald Court, Jonesboro Georgia 30236(US)

(74) Representative: Bird, Vivian John, Rolls-Royce plc PO Box 3, Filton, Bristol BS12 7QE(GB)

## Description

It is already well known in the art to provide a vectorable nozzle which comprises a relatively fixed jet pipe and a downstream pipe which is attached to the jet pipe with gimbal means to enable the downstream pipe to be universally swivable with respect to the fixed pipe such that the gas efflux from the nozzle may be vectored both sideways (yaw) and up and down (pitch) in relation to the longitudinal axis of an aircraft provided with such a nozzle. In this way the thrust may be selectively directed for high manouvrability. Such nozzles are described in GB Patents 1 248 573 and 1 250 491 for example.

Where afterburner systems are used to augment jet thrust or thrust reversal means are used to reduce landing distance more sophisticated nozzles with variable flow area mechanisms are required.

One example of such a nozzle employing a variable flow area mechanism is that shown in German patent 1 964 716.

This shows a conventional variable flow area nozzle situated at the end of a fixed jet pipe. A ring having a partially spherical inner surface is situated co-axially about the end of the fixed jet pipe resting on a number of supports having partly spherical outer surfaces. Four wall segments which define a downstream pipe are pivoted to the ring which forms a universally swivelable joint between the jet pipe and downstream pipe to allow vectoring as described above.

Gimbal nozzles of the type described above can have sealing problems due to the very high moment exerted on the nozzle when the gas efflux is vectored causing ovality. This problem may be compounded when variable area means are included in the nozzle. Furthermore it is also desirable to incorporate thrust reversal means into the nozzle in order to produce a relatively light and compact unit.

It is an object of the present invention to provide a vectorable nozzle of the gimbal type described above with variable area means and thrust reversal means combined therein.

It is a further object to provide a vectorable nozzle which is relatively stiff in order to avoid sealing problems associated with ovality.

These objects are achieved according to the present invention by a vectorable variable area propulsion nozzle for a gas turbine aero-engine, the nozzle comprising a first duct having a longitudinal axis, a second duct having a longitudinal axis, a gimbal attachment means for connecting an upstream end of the second duct to a downstream end of the first duct thereby to allow universal swivelling of the second duct relative to the first duct so that the longitudinal axis of the second duct intersects the longitudinal axis of the first duct at a fixed swivel point when the second duct is swivelled, and a first actuator means operable on the second duct to swivel the second duct relative to the first duct, the second duct comprising a supporting ring which is free to swivel relative to the first duct characterised in that the supporting ring is constrained against rotation about its longitudinal axis by means of circumferentially spaced pivots of the gimbal attachment means, the supporting ring having a plurality of guide means extending in a direction along the axis, there being a plurality of flaps which define the geometry and outlet area of the nozzle and the flaps being provided with means which co-operate with the guide means to define a trackway along which the flaps can move bodily relative to the supporting ring thereby to vary the outlet area of the nozzle, and actuator means operable to move the flaps along the guide means.

The invention will now be described by way of example with reference to the accompanying drawings in which:-

Figure 1 illustrates one nozzle according to the present invention,

Figures 2 and 3 are sectional views of the gimbal arrangement, of an alternative nozzle to that shown in Figure 1,

Figure 4 is a sectional view of a second nozzle constructed in accordance with the present invention,

Figure 5 shows the flap arrangement of the nozzle of Figure 4 in more detail,

Figure 6 shows the nozzle of Figure 4 in a reverse thrust mode,

Figure 7 and 8 show the flap actuation means and the vectoring (swivelling) actuation means respectively of the nozzle of Figure 4,

Figures 9 and 10 show the nozzle of Figure 4 in various modes, and

Figures 11 and 12 show a third version of the nozzles of Figure 1 and 4.

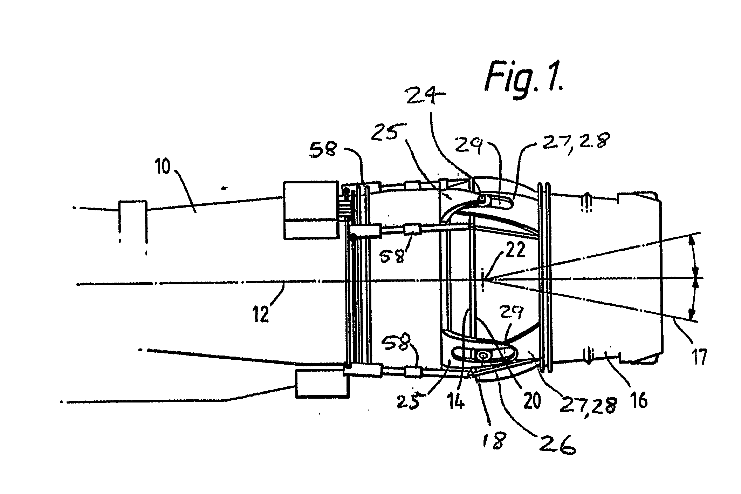

Referring to Figure 1 the nozzle comprises a fixed first duct 10 having a longitudinal axis 12 terminating at a downstream end 14, a second duct 16 having a second longitudinal axis 17 downstream of the first duct 10, and gimbal attachment means 18 for connecting an upstream end 20 of the second duct to the downstream end 14 of the first duct. The gimbal attachment means 18 allows universal swivelling of the second duct 16 relative to the first duct so that when the second duct is swivelled the second longitudinal axis 17 intersects the first longitudinal axis at a fixed swivelling point 22 irrespective of the relative position of the second duct to the first.

The gimbal attachment means comprises four pivots 24, 26 placed at 90° apart to provide lateral movement in any direction. The pivots 24 are carried by two fixed arms 25 which are attached to the fixed duct 10 and the pivots 26 are carried by two arms 27 which constitute part of a support rig 28 on which the second duct 16 is carried. The pivots 24 and 26 locate in elongate slots 29 in respectively the arms 27 and 25, to allow the support ring 28 to swivel.

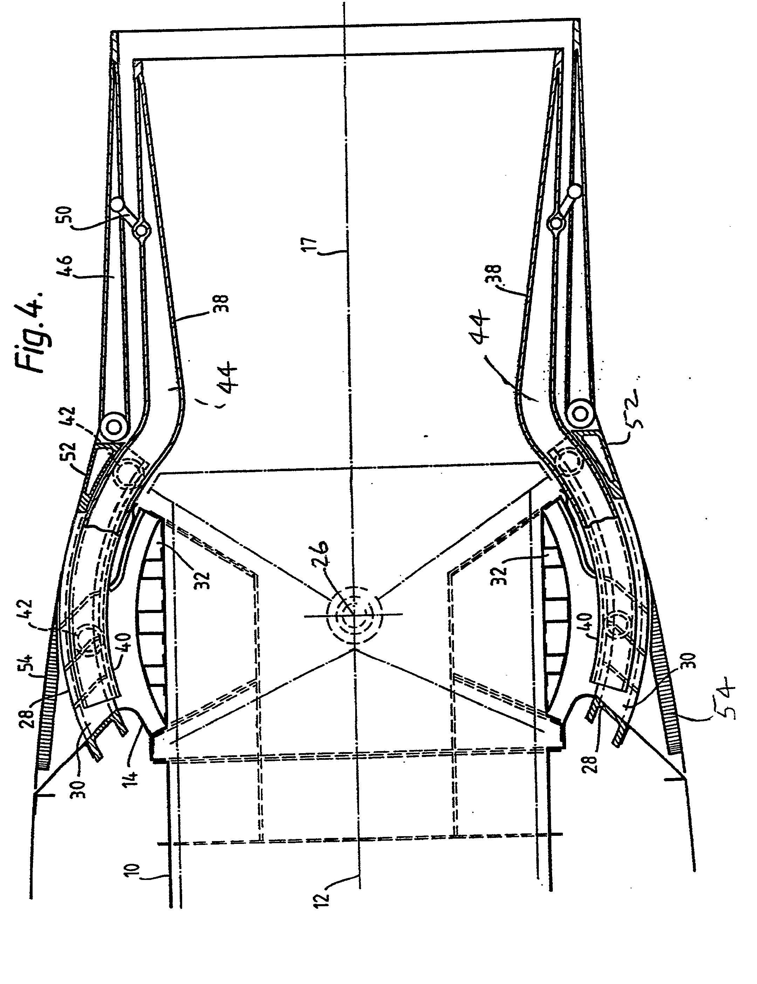

The supporting ring 28 (best seen in figure 4) is arcuate in section to provide for universal swivelling. The ring 28 has four openings 30 which have cascade vanes 34 through which reversed flow exhaust gas can be directed. Normally during forward thrust the openings 30 are covered by the two doors 32.

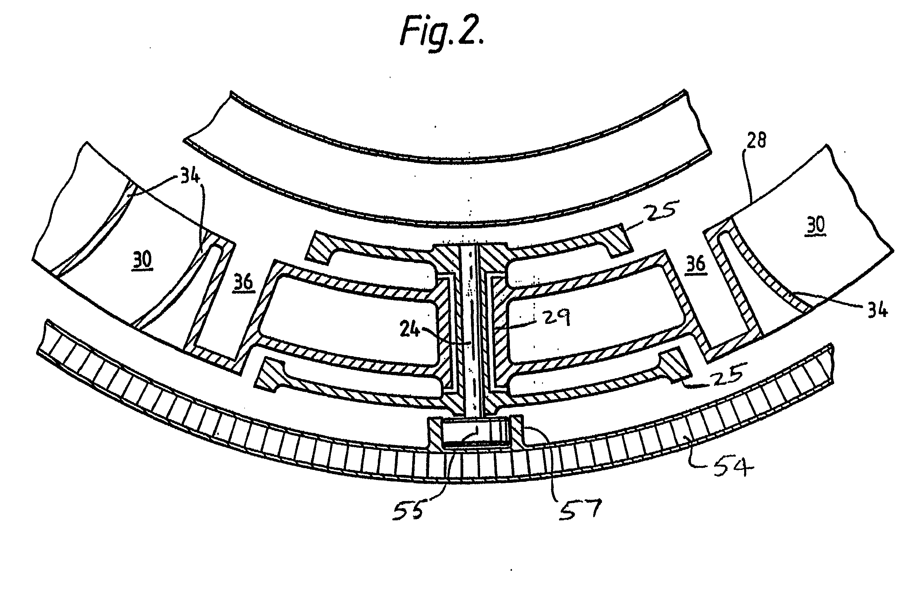

The second duct 16 also includes an axisymmetric array of flaps 38, 44 which are described below with reference to figures 2 to 10. The flaps 38, 44 are movable bodily relative to the ring 28 as described below and their means of attachment to ring 28 is exactly as described below.

Referring in particular to figures 2 to 10 there is shown a second form of nozzle, constructed in accordance with the present invention, which only differs from that shown in figure 1 in so far as concerns the specific detail of the location of the slots 29. In figure 1 the slots 29 are in the respective arms 25, 27; in figures 2 to 10 the slots 29 are in the ring 28.

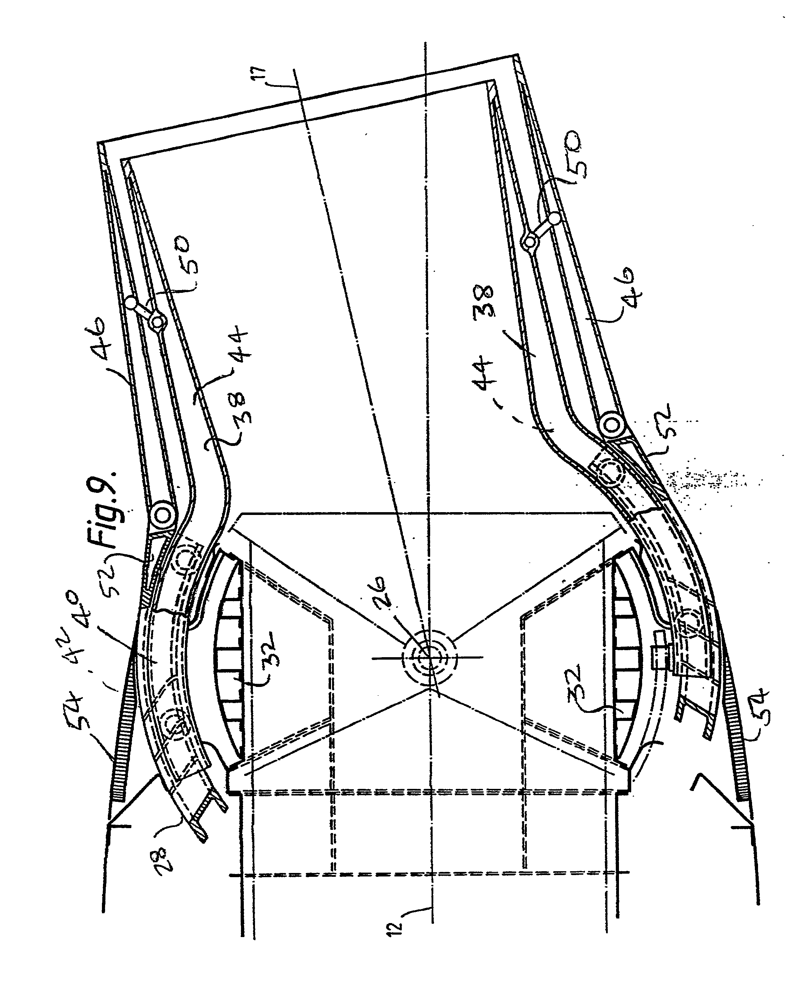

Referring to Figure 2 the pivots 24 are each carried by a pair of fixed arms 25, which are attached to fixed structure of the engine. The pivots 24 are located in slots 29 in the supporting ring 28 which extend longitudinally. The slots 29 allow the ring 28 to move freely into and out of the plane of the drawing of Figure 2. Axial forces on the ring 28 are reacted by the fixed structure through the actuators 58 (see Figure 8) whereas circumferential forces are reacted by the pivots 24, 26. The outer end of each pivot 24 has a roller 55 which locates in a guideway 57 in a translatable outer fairing sleeve 54 (best seen in Figure 4).

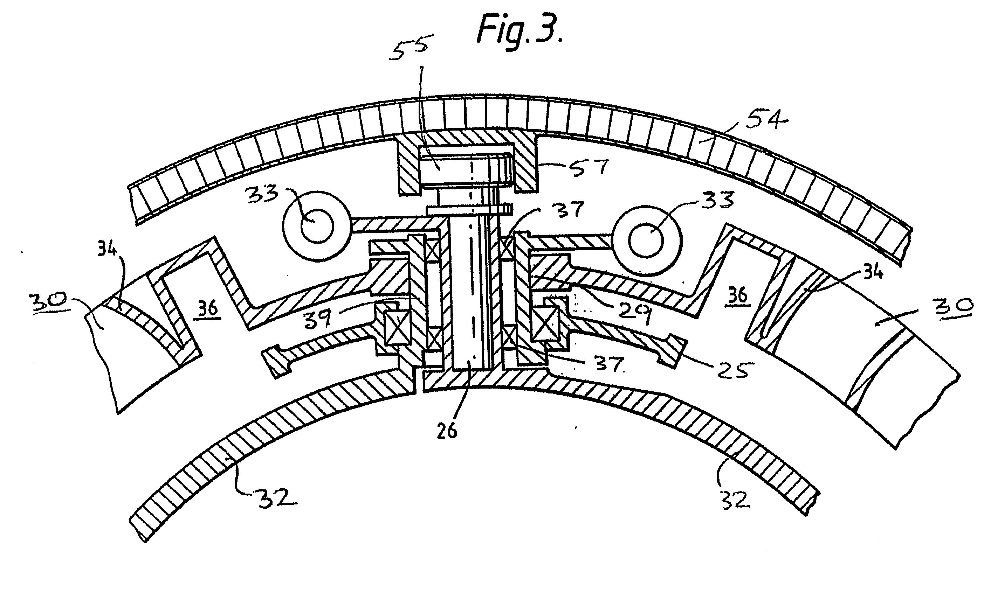

Referring to Figure 3 the pivots 26 are very similar to the pivots 24 in that they are carried by fixed arms 25 mounted on fixed structure of the engine and each has a roller 55 at its outermost end which locates in a guideway 57 in the translatable outer fairing sleeve 54. Mounted on each pivot 26 are two thrust reverser doors 32. A first door 32 has a bore in which the pivot 26 locates and the other door 32 is mounted on bearings 37 which are carried by the spindle of the first door 32. Again the supporting ring 28 has longitudinally extending slots which allow the ring 28 to move over the outer spindle 39 of the door 32.

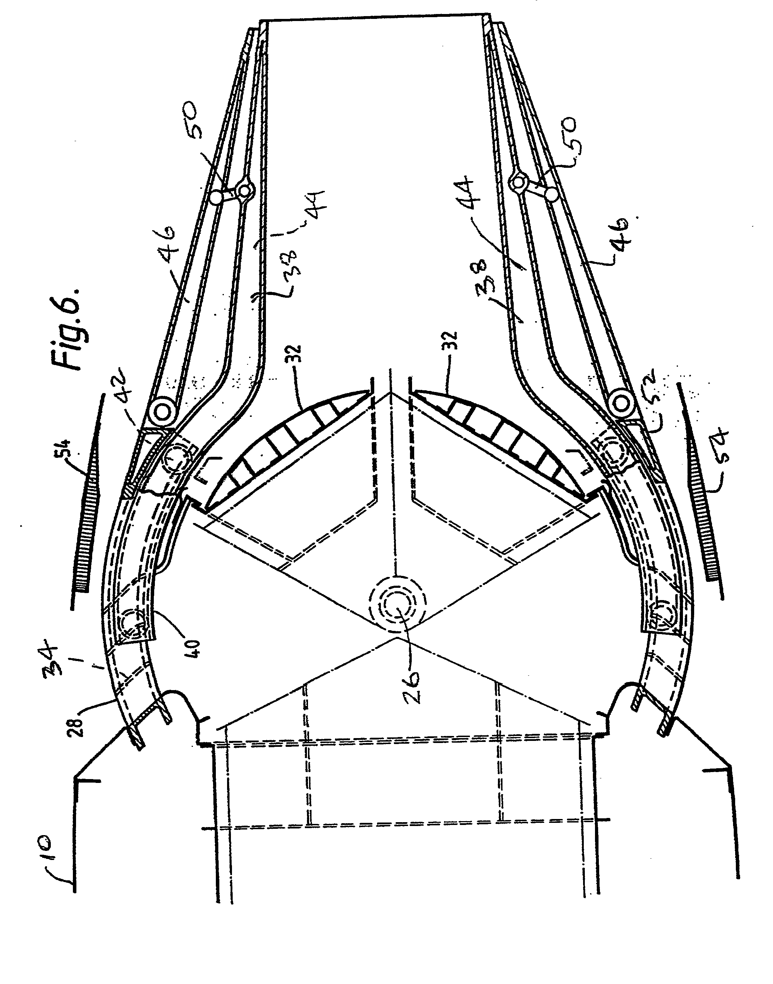

In a first position (figure 4) the doors 32 obturate the openings 30 and allow a gas efflux to flow through the two ducts. When deployed in a second position, (figure 6) the two doors 32 uncover the openings 30 and combine to block the second duct and divert the gas efflux through the openings 30 for reverse thrust. A sleeve fairing 54 translates aft when the reverser doors are rotated in order to allow the jet efflux to escape. Actuator jacks 33 are provided for rotating the doors 32 about the axes of the pivots 26. Thrust loads on the doors 32 are reacted by the fixed structure through the pivots 26.

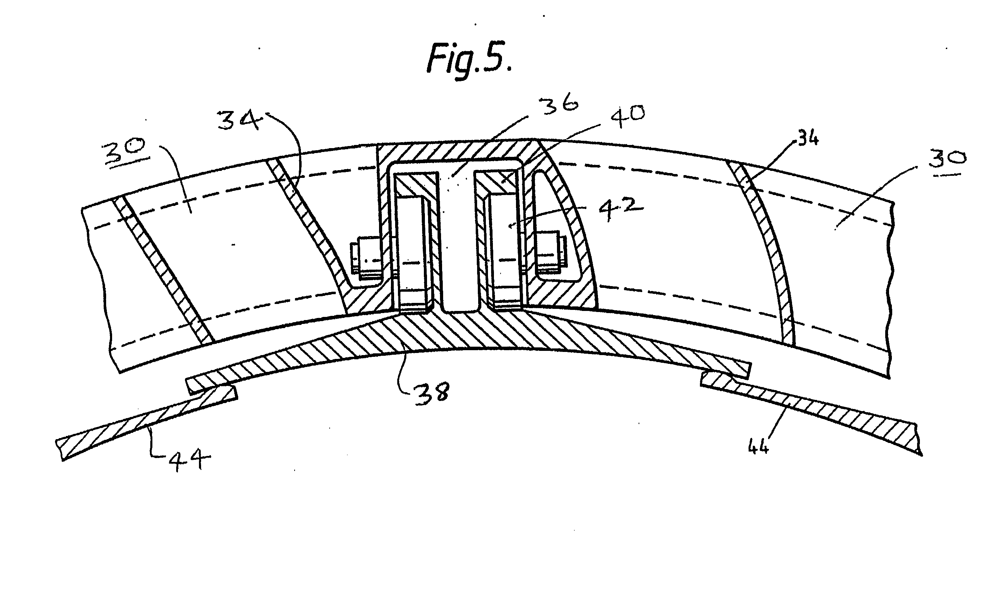

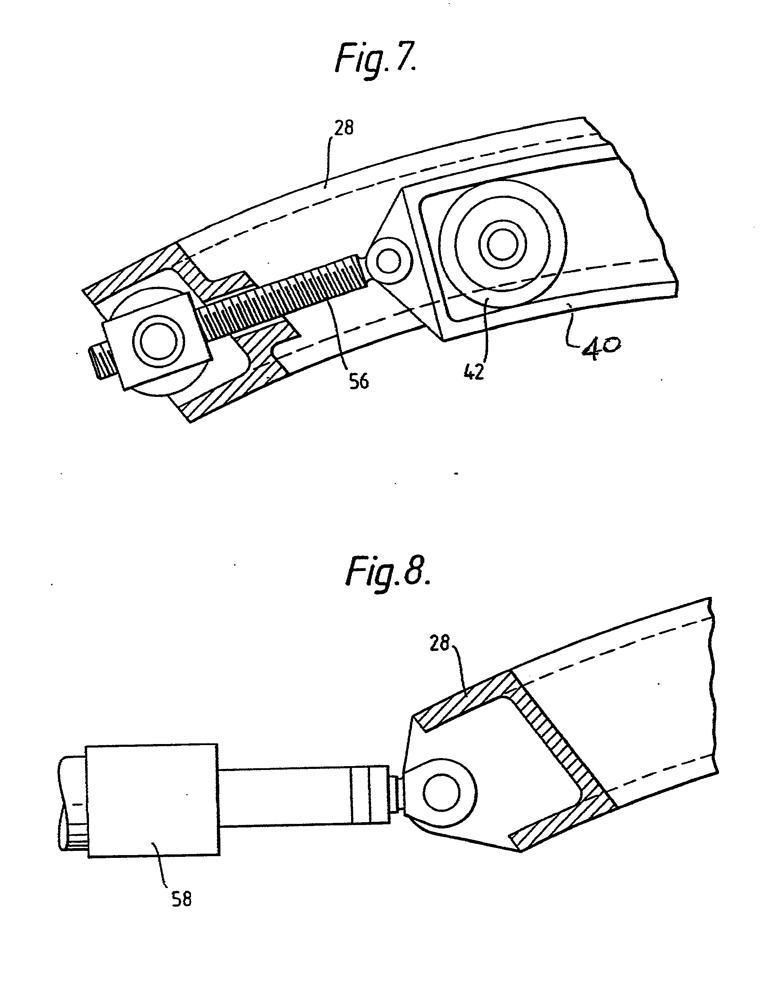

Integrally formed in the supporting ring 28 are a plurality of guide means in the form of track rail beams 36. The second duct 16 further includes a plurality of master flaps 38 for varying the flow area of the nozzle. Integrally formed, or connected with each master flap 38, is an arcuate rib 40 which slidably engages each track rail beam 36 by virtue of rollers 42. Referring to Figure 7 there is shown details of the actuation means 56 which is mounted on the supporting ring 28 and acts on each rib 40 in order to cause them to slide in the track rail beams 36 to vary the area of the nozzle. In this way, the area of the nozzle is varied by sliding the master flaps bodily along the track rail beams 36 independently of the vectoring position of the second duct 16 with respect to the first 10. This also provides a relatively stiff arrangement to prevent ovality of the second duct. A plurality of interconnecting slave flaps 44 are also provided, (see Figure 5) in a manner well known in the art, (GB Patent 2567941 for example) to provide a continuous duct wall. These flaps 44 have features which engage the master flaps 38 so that they are pulled axially with the flaps 38 but allow circumferential expansion and contraction and also have features which prevent them collapsing inwards. To reduce aircraft drag, a similar number of fairing flaps 46 are provided radially outward of the master flaps and are connected thereto via hinged links 50. The fairing flaps 46 are hinged at their downstream end to a ring 52 which is formed integrally with the supporting ring 28.

Figure 8 shows the actuation means 58 for swivelling the supporting ring 28 and hence the second duct 16. The actuation means 58 are attached to the relatively fixed first duct and act on the supporting ring 28 in order to swivel the second duct 16. Both actuation means 56, 58 comprise a plurality of synchronised actuators for system redundancy.

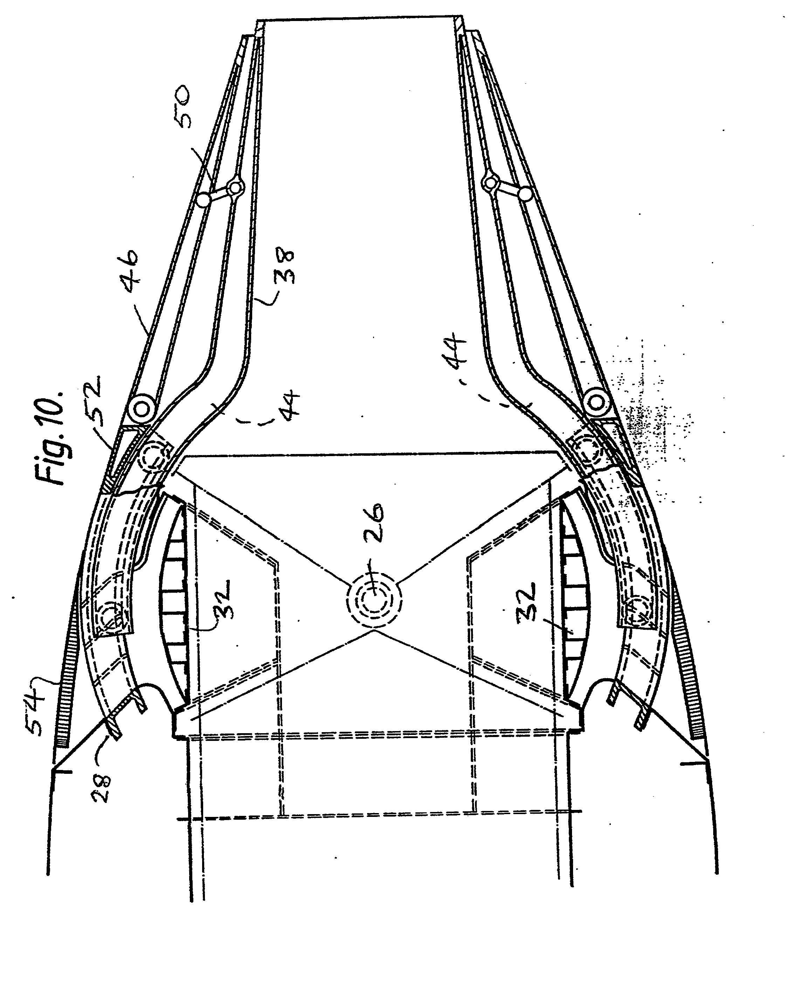

Figures 9 and 10 show the nozzle of figures 2 to 8 in various vectoring and throat area positions.

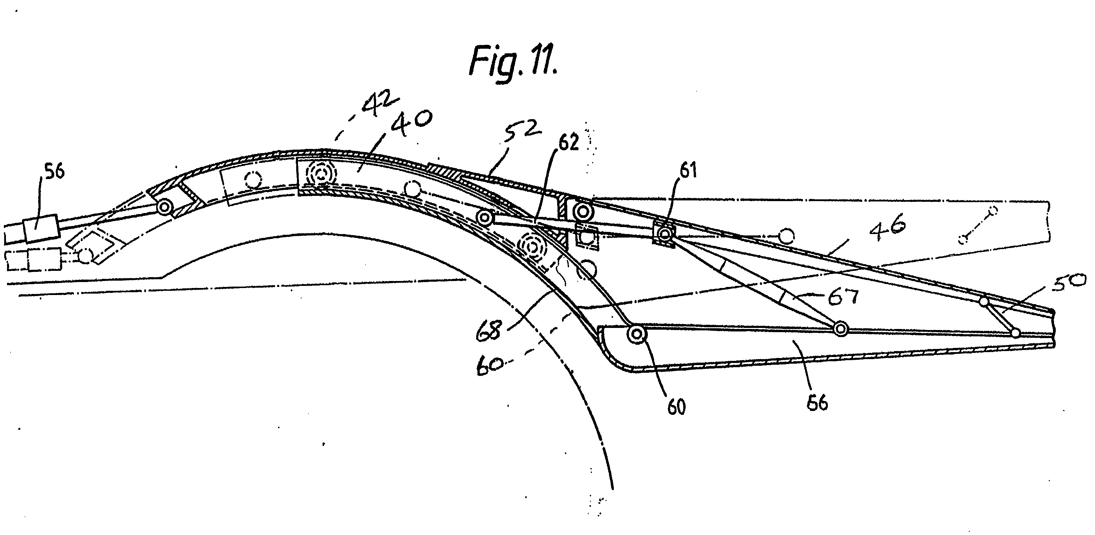

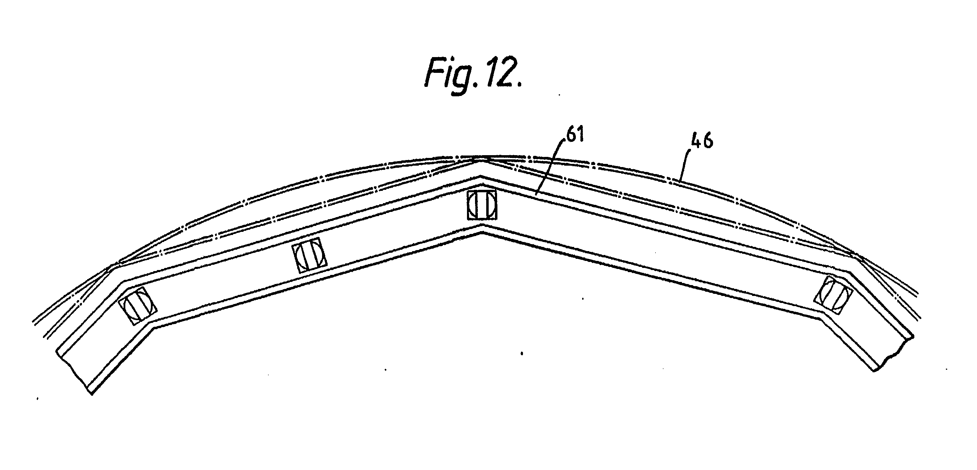

Figure 11 shows a more sophisticated version of the nozzle in which divergent master flaps 66 are hinged to convergent master and slave flaps 68 and 60 respectively. Each divergent flap is arcuate and is connected via a strut 67 to a unison ring 61 (shown in Figure 12) which itself is connected via a link rod 62 to the supporting ring 28. Again there is provided a plurality of outer flaps 46, each pivotally connected at its upstream end to the supporting ring 28 and connected by way of pivotal links 50 to each flap 66. The strut 67 may be of a hydraulic jack which can be lengthened or shortened to vary the amount of divergence of flaps 66.

The main advantage of the present invention is that the supporting ring 28 performs three functions. It provides support for the cascade of vanes 34 in each opening 30 as well as supporting the master flaps 38 by virtue of the track rail beams 36 slidably engaged by the I-section ribs 40 which are the backbone of the master flaps 38 and thirdly provides for universal swivelling of the second duct by virtue of attachment to the gimbal attachment means 18.

**Claims**

1. A vectorable variable area propulsion nozzle for a gas turbine aero-engine, the nozzle comprising a first duct (10) having a longitudinal axis (12), a second duct (16) having a longitudinal axis (17), a gimbal attachment means (18) for connecting an upstream end of the second duct (16) to a downstream end of the first duct (10) thereby to allow universal swivelling of the second duct (16) relative to the first duct (10) so that the longitudinal axis (17) of the second duct (16) intersects the longitudinal axis (12) of the first duct (10) at a fixed swivel point (22) when the second duct (16) is swivelled, and a first actuator means (56) operable on the second duct (16) to swivel the second duct (16) relative to the first duct (10), the second duct (16) comprising a supporting ring (28) which is free to swivel relative to the first duct (10) characterised in that the supporting ring (28) is constrained against rotation about its longitudinal axis (17) by means of circumferentially spaced pivots (24, 26) of the gimbal attachment means (18), the supporting ring (28) having a plurality of guide means (36) extending in a direction along the axis (17), there being a plurality of flaps (38, 44, 60, 66, 68) which define the geometry and outlet area of the nozzle and the flaps (38, 44) being provided with means (40, 42) which co-operate with the guide means to define a trackway along which the flaps (38), (44) can move bodily relative to the supporting ring (28) thereby to vary the outlet area of the nozzle, and actuator means (56) operable to move the flaps (38, 34) along the guide means.

2. A nozzle according to claim 1 wherein there are four pivots (24, 26) equispaced around the circumference to define two orthogonal pivotal axes.

3. A nozzle according to claim 2 wherein one pair of pivots (24) is carried by fixed structure (25) of the engine and locates in slots (29) in the supporting ring (28) and the other pair of pivots (26) is carried by the supporting ring (28) and locates in slots (29) in the fixed structures (25) of the engine.

4. A nozzle according to claim 2 wherein all the pivots (24, 26) are carried by fixed structure (25) of the engine and the pivots (24, 26) locate in slots (29) in the supporting ring (28).

5. A nozzle according to claim 4 wherein the supporting ring (28) has openings (30) through which can be directed a reversed flow of engine exhaust gases, and there is provided two thrust reverser doors (32) pivotally mounted on two of the pivots (26), the thrust reverser doors (32) being movable to and from a first position where they cover the openings (30), to and from a second position where they uncover the openings (30) and about each other to redirect the flow of exhaust gases out of the openings (30).

6. A nozzle according to any one of the preceding claims wherein the guide means (36) comprises an arcuate track (36), and the means (40, 42) which co-operates with the guide means comprises an arcuate rib (40) on which is mounted rollers (42) which run along the track (36).

7. A nozzle according to any one of the preceding claims wherein the flaps (38, 44) comprise an arcuate upstream portion which defines a convergent part of the nozzle and a downstream divergent portion which defines a divergent part of the nozzle.

8. A nozzle according to claim 7 wherein there is provided a plurality of outer flaps (46) pivotally attached at their upstream ends to the supporting ring (28) and are connected by links (50) to the flaps (38).

9. A nozzle according to any one of claims 1 to 6 wherein the flaps (68) are of arcuate shape in cross section.

10. A nozzle according to claim 9 wherein there is provided a plurality of flaps (66) pivotally attached at their upstream end to a downstream end of the flaps (68), a unison ring (61) which encircles the flaps (66) and is connected to the support ring (28) to be movable with the ring (28), and the flaps (66) are connected to the unison ring by means of struts (67).

11. A nozzle according to claim 10 wherein there is provided a plurality of outer flaps (46) pivotally connected at an upstream end to the supporting ring (28) and connected at a downstream location to the flaps (66) by means of links (50).

**Revendications**

1. Tuyère de propulsion orientable à section variable pour un moteur d'avion à turbine à gaz, la tuyère comprenant un premier conduit (10) possédant un axe longitudinal (12), un deuxième conduit (16) possédant un axe longitudinal (17), un moyen de fixation à la Cardan (18) pour assembler une extrémité amont du deuxième conduit (16) à une extrémité aval du premier conduit (10) afin de permettre un pivotement universel du deuxième conduit (16) par rapport au premier conduit (10), de façon que l' axe longitudinal (17) du deuxième conduit (16) coupe l'axe longitudinal (12) du premier conduit (10) en un point de pivotement fixe (22) lorsque le deuxième conduit (16) est pivoté, et un premier moyen actionneur (56) pouvant agir sur le deuxième conduit (16) pour faire pivoter le deuxième conduit (16) par rapport au premier conduit (10), le deuxième conduit (16) comprenant une bague de support (28) qui est libre de pivoter par rapport au premier conduit (10), caractérisée en ce que la bague de support (28) est empêchée de tourner autour de son axe longitudinal (17) à l'aide de pivots périphériquement espacés (24, 26) du moyen de fixation à la Cardan (18), la bague de support (28) possédant une pluralité de moyens de guidage (36) s'étendant dans une direction suivant l'axe (17), une pluralité de volets (38, 44, 60, 66, 68) étant présents, qui définissent la géométrie et la section de sortie de la tuyère, et les volets (38, 44) étant pourvus de moyens (40, 42) qui coopèrent avec les moyens de guidage pour définir une voie le long de laquelle les volets (38, 44) peuvent se déplacer totalement par rapport à la bague de support (28) afin de faire varier la section de sortie de la tuyère, et d'un moyen actionneur (56) capable de déplacer les volets (38, 44) le long des moyens de guidage.

2. Tuyère selon la revendication 1, dans laquelle il est prévu quatre pivots (24, 26) équidistants sur la périphérie, pour définir deux axes do pivotement orthogonaux.

3. Tuyère selon la revendication 2, dans laquelle une paire de pivots (24) est portée par la structure fixe (25) du moteur et se positionne dans des fentes (29) pratiquées dans la bague de support (28) et l' autre paire de pivots (26) est portée par la bague de support (28) et se positionne dans des fentes (29) pratiquées dans la structure fixe (25) du moteur.

4. Tuyère selon la revendication 2, dans laquelle tous les pivots (24, 26) sont portés par la structure fixe (25) du moteur, et les pivots (24, 26) se positionnent dans des fentes (29) pratiquées dans la bague de support (28).

5. Tuyère selon la revendication 4, dans laquelle la bague de support (28) possède des ouvertures (30), à travers lesquelles peut être dirigé un flux inversé de gaz d'échappement du moteur, et il est prévu deux portes inverseuses de poussée (32) montées pivotantes sur deux des pivots (26), les portes inverseuses de poussée (32) pouvant être déplacées depuis et vers une première position dans laquelle elles recouvrent les ouvertures (30), depuis et vers une deuxième position, dans laquelle elles découvrent les ouvertures (30), et l'une par rapport à l'autre afin de réorienter le flux de gaz d'échappement hors des ouvertures (30).

6. Tuyère selon l'une quelconque des revendications précédentes, dans laquelle le moyen de guidage (36) comprend une voie arquée (36), et les moyens (40, 42) qui coopèrent avec le moyen de guidage comprennent une nervure arquée (50) sur laquelle est montée des galets (42) qui roulent le long de la voie (36).

7. Tuyère selon l'une quelconque des revendications précédentes, dans laquelle les volets (38, 44) comprennent une partie amont arquée qui définit une partie convergente de la tuyère et une partie divergente aval qui définit une partie divergente de la tuyère.

8. Tuyère selon la revendication 7, dans laquelle il est prévu une pluralité de volets extérieurs (46) fixés pivotants, à leurs extrémités amont, à la bague de support (28) et qui sont reliés, par des bielles (50), aux volets (38).

9. Tuyère selon l'une quelconque des revendications 1 à 6, dans laquelle les volets (68) ont une section transversale de forme arquée.

10. Tuyère selon la revendication 9, dans laquelle il est prévu une pluralité de volets (66) fixés pivotants, à leurs extrémités amont, à une extrémité aval des volets (68), une bague de réunion (61) qui encercle les volets (66) et qui est reliée à la bague de support (28) de manière à être mobile avec la bague (28), et les volets (66) sont reliés à la bague de réunion, par l'intermédiaire de jambes de force (67).

11. Tuyère selon la revendication 11, dans laquelle il est prévu une pluralité de volets extérieurs (46) reliés pivotants, à une extrémité amont, à la bague de support (28), et reliés, en un point aval, aux volets (66) par l'intermédiaire de bielles (50).

**Patentansprüche**

1. Schwenkstrahldüse mit veränderlichem Querschnitt für ein Gasturbinenflugtriebwerk, wobei die Düse einen ersten Kanal (10) mit einer Längsachse (12), einen zweiten Kanal (16) mit einer Längsachse (17), eine kardanische Aufhängevorrichtung (18) zum Verbinden eines stromaufseitigen Endes des zweiten Kanals (16) mit einem stromabseitigen Ende des ersten Kanals (10) unter Ermöglichung einer universellen Schwenkung des zweiten Kanals (16) bezüglich des ersten Kanals (10), derart daß bei Schwenkung des zweiten Kanals (16) die Längsachse (17) des zweiten Kanals (16) die Längsachse (12) des ersten Kanals (10) an einem festen Schwenkpunkt schneidet, und eine auf den zweiten Kanal (16) einwirkende erste Betätigungsvorrichtung (56) zum Schwenken des zweiten Kanals (16) bezüglich des ersten Kanals (10) aufweist, wobei der zweite Kanal (16) einen frei bezüglich des ersten Kanals (10) schwenkbaren Tragring (28) aufweist, dadurch gekennzeichnet, daß der Tragring (28) gegen eine Drehbewegung um seine Längsachse (17) mittels mit Abstand am Umfang angeordneten Schwenkzapfen (24, 26) der kardanischen Aufhängevorrichtung (18) gesichert ist, wobei der Tragring (28) mehrere in Richtung der Achse (17) verlaufende Führungen (36) hat, wobei mehrere die Form und den Austrittsquerschnitt der Düse bestimmende Klappen (38, 44, 60, 66, 68) vorgesehen sind und daß die Klappen (38, 44) mit Mitteln (40, 42) ausgestattet sind, welche in Zusammenwirkung mit den Führungen eine Führungsbahn definieren, entlang welcher die Klappen (38, 44) gegenüber dem Tragring (28) bewegbar sind, wobei sie den Austrittsquerschnitt der Düse verändern und wobei eine Betätigungsvorrichtung (56) zur Bewegung der Klappen (38, 44) entlang der Führungen vorgesehen ist.

2. Düse nach Anspruch 1, bei der vier Schwenkzapfen (24, 26) mit gleichem Abstand am Umfang angeordnet sind, um zwei orthogonale Schwenkachsen zu bilden.

3. Düse nach Anspruch 2, wobei zwei der Schwenkzapfen (24) an einer festen Anordnung (25) des Triebwerks gehaltert und in Schlitzen (29) im Tragring (28) angeordnet sind und die anderen zwei Schwenkzapfen (26) am Tragring (28) gehaltert und in Schlitzen (29) in der festen Anordnung (25) des Triebwerks angeordnet sind.

4. Düse nach Anspruch 2, wobei sämtliche Schwenkzapfen (24, 26) an einer festen Anordnung (25) des Triebwerks gehaltert und in Schlitzen (29) im Tragring (28) angeordnet sind.

5. Düse nach Anspruch 4, wobei der Tragring (28) Öffnungen (30) aufweist, durch welche ein Umkehrstrom der Triebwerksabgase geleitet werden kann, und wobei zwei schwenkbar an zwei Schwenkzapfen (26) montierte Schubumkehrklappen (32) vorgesehen sind, welche in eine und aus einer ersten Position, in der sie die Öffnungen (30) überdecken, und in eine und aus einer zweiten Position, in der sie die Öffnungen (30) freigeben, und gegeneinander bewegbar sind, um den Triebwerksabgasstrahl durch die Öffnungen (30) hinaus umzuleiten.

6. Düse nach einem der vorstehenden Ansprüche, wobei die Führungen (36) eine bogenförmige Führungsbahn (36) und die mit den Führungen zusammenwirkenden Mittel (40, 42) eine bogenförmige Rippe (40) aufweisen, an welcher Rollen (42) befestigt sind, welche auf der Führungsbahn (36) laufen.

7. Düse nach einem der vorstehenden Ansprüche, wobei die Klappen (38, 44) einen bogenförmigen stromaufwärtigen Abschnitt, welcher einen konvergierenden Teil der Düse bildet, und einen divergierenden stromabwärtigen Abschnitt aufweisen, welcher einen divergierenden Teil der Düse bildet.

8. Düse nach Anspruch 7, wobei eine Mehrzahl von äußeren Klappen (46) vorgesehen ist, welche schwenkbar an ihren stromaufseitigen Enden mit dem Tragring (28) und durch Zwischenglieder (50) mit den Klappen (38) verbunden sind.

9. Düse nach einem der Ansprüche 1 bis 6, wobei die Klappen (68) im Querschnitt bogenförmig sind.

10. Düse nach Anspruch 9, wobei eine Mehrzahl von Klappen (66) vorgesehen ist, welche mit ihren stromaufseitigen Enden schwenkbar an den stromabseitigen Enden der Klappen (68) befestigt sind, und ein Verbindungsring (61) vorgesehen ist, welcher die Klappen (66) umgibt und mit dem Tragring (28) mit diesem zusammen bewegbar verbunden ist, und wobei die Klappen (66) mit dem Verbindungsring mittels Streben (67) verbunden sind.

11. Düse nach Anspruch 10, wobei eine Mehrzahl von äußeren Klappen (46) vorgesehen ist, welche mit ihrem stromaufwärtigen Ende schwenkbar mit dem Tragring (28) an einer stromabwärtigen Stelle über Zwischenglieder (50) mit den Klappen (66) verbunden sind.

Fig. 1.

EP 0 281 264 B1

Fig.2.

Fig.3.

Fig.4.

EP 0 281 264 B1

*Fig.5.*

30    34    36    40    34    30

42

38

44                    44

EP 0 281 264 B1

Fig.6.

## Fig.7.

## Fig.8.

Fig.9.

Fig.10.

EP 0 281 264 B1

Fig. 11.

Fig.12.

EP 0 281 264 B1